Europäisches Patentamt

**European Patent Office**

Office européen des brevets

(11) Publication number : **0 501 617 A2**

(12) **EUROPEAN PATENT APPLICATION**

(21) Application number : **92300918.7**

(22) Date of filing : **04.02.92**

(51) Int. Cl.$^5$ : **G11B 5/31**

(30) Priority : **27.02.91 US 661796**

(43) Date of publication of application :
**02.09.92 Bulletin 92/36**

(84) Designated Contracting States :
**DE FR GB**

(71) Applicant : **International Business Machines
Corporation
Old Orchard Road
Armonk, N.Y. 10504 (US)**

(72) Inventor : **Holmes, Richard Swight
5859 Paddon Circle
San Jose, CA 95123 (US)**
Inventor : **Romankiw, Lubomyr Taras
7 Dunne Lane
Briarcliff Manor, New York 10510 (US)**

(74) Representative : **Mitchell, Allan Edmund et al
IBM United Kingdom Limited Intellectual
Property Department Hursley Park
Winchester Hampshire SO21 2JN (GB)**

(54) **Thin film magnetic read/write head.**

(57)   A thin film magnetic read/write head comprises an open magnetic yoke having spaced
apart outside legs, confronting pole pieces 36
and 38 spaced apart to provide a transducing
gap (40) at one end, and a back closure 42 at the
other end. A winding is provided on each of the
outside legs, wound in a direction so that energizing the windings produces a flux that is
additive a the transducing gap. A non-magnetic
spacer layer 44 is positioned between parts 31
and 33 of the yoke legs beyond the transducing
gap to provide vertical separation greater than
the transducing gap as the yoke legs diverge to
the outside legs so that the flux leakage is
minimized and a high head efficiency is main-
tained.

FIG. 4

EP 0 501 617 A2

This invention relates to thin film magnetic heads for writing on and reading from magnetic recording media.

There are many alternative designs known in the prior art for thin film inductive magnetic read/write heads. US-A- 3,344,237 discloses a thin film magnetic head in which a coil is wound around a first leg of the magnetic yoke, but the second leg of the magnetic yoke is above the first leg of the magnetic yoke.

US-A- 3,986,210 discloses a thin film magnetic head in which the magnetic yoke is formed in an enclosed rectangle. A coil is wound around one of the long legs of the rectangle.

US-A- 3,662, 119 discloses a thin film magnetic head in which an open magnetic yoke is provided having a winding on each of the outside legs of the magnetic yoke. However, the pole pieces have no vertical separation except for the gap forming layer.

Prior art thin film magnetic heads with an open magnetic yoke have not been designed so that both the read and write efficiencies are high.

This invention seeks to provide a thin film inductive magnetic read write/head having both read and write efficiencies that are high.

In accordance with the invention, a thin film magnetic read/write head comprises an open magnetic yoke having spaced apart outside legs, confronting overlapped pole pieces at one end spaced apart to form a transducing gap, and a back closure at the other end. A winding is produced on each of the outside legs of the magnetic yoke, wound in a direction so that energizing the windings produce a flux that is additive at the transducing gap. A non-magnetic spacer member is positioned between the legs of the magnetic yoke beyond the confronting pole pieces to provide vertical separation greater than the transducing gap as the yoke legs diverge from the transducing gap to the outside legs of the magnetic yoke.

The scope of the invention is defined by the appended claims; and how it can be carried into effect is hereinafter particularly described with reference to the accompanying drawings in which:

Fig. 1 is a simplified diagram of a magnetic disk file embodying the present invention;

Fig 2. is a plan view of the trailing end of a slider of the magnetic disk file of Fig. 1;

Fig. 3 is a plan view of a thin film magnetic head according the present invention;

Fig. 4 is a section on the line 4-4 of Fig. 3;

Fig. 5 is a section similar to Fig. 4 of part of another embodiment of head according to the invention;

Fig. 6 is a section on the line 6-6 of Fig. 3;

Fig. 7 is a section on line 7-7 of Fig. 3;

Fig. 8 is a section on lines 8-8 of Fig. 3;

Fig. 9 is a plan view of another embodiment of head according to the invention;

Fig. 10 is a plan view of a further embodiment of head according to the invention;

Fig. 11 is a plan view of the yoke structure of another embodiment of head according to the invention;

Fig. 12 is a plan view of the yoke structure of a further embodiment of head according to the invention;

Fig. 13 is a plan view of the yoke structure of yet another embodiment of head according to the invention;

Fig. 14 is a plan view of a yoke structure to illustrate features of the invention;

Fig. 15 is a broken perspective view of part of another embodiment of magnetic yoke structure; and

Fig. 16 is an end perspective view of a further embodiment of magnetic yoke structure.

Although the present invention is described as embodied in a magnetic disk file, it will be apparent that the invention is also applicable to other magnetic recording systems such as a magnetic tape recording system, for example.

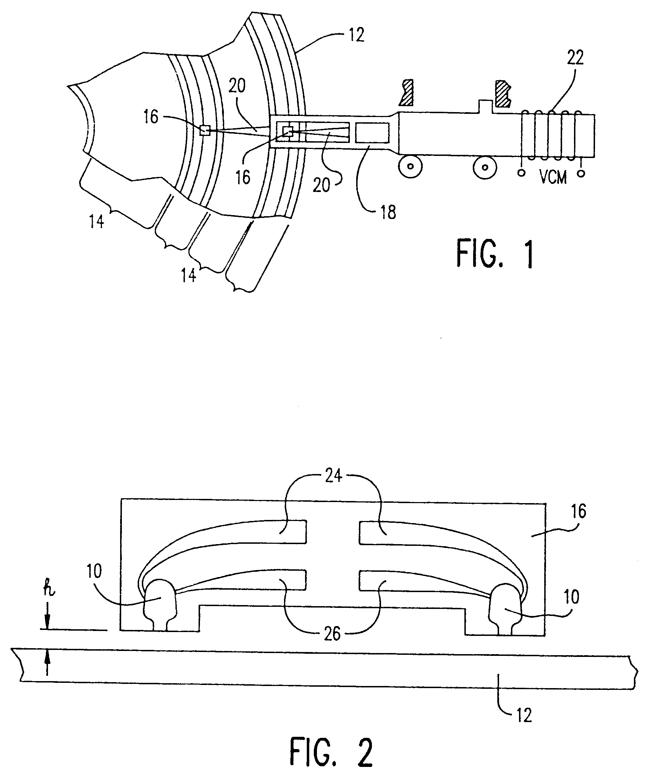

In a magnetic disk file (Fig. 1) in which the invention is embodied, at least one rotatable magnetic disk 12 is supported on a spindle and rotated by a disk drive motor (not shown). Data is magnetically recorded on each disk 12 is in the form of annular patterns of concentric data tracks 14. Magnetic heads on sliders 16 read from or record in tracks 14. As the disks rotate, the sliders 16 are moved radially in and out so that the heads may access different portions of the disk surface containing the data. Each slider 16 is attached to an actuator arm 18 by means of a suspension 20 which provides a slight spring force to bias the slider 16 against the disk surface. Each actuator arm 18 is attached to an actuator means 22 in the form of a voice coil motor (VCM) having a coil movable within a fixed magnetic field. The direction and velocity of the coil movements is controlled by the current supplied.

During operation of the disk file, the rotation of the disk 12 generates an air bearing between the slider 16 and the disk surface. The air bearing thus generated counterbalances the slight spring force of the suspension 20 and supports the slider 16 off the disk surface by a small spacing during operation.

Disk files may contain a large number of disks and actuators, and each actuator may support a number of sliders.

In one embodiment of the invention, the trailing end face of the slider 16 (Fig. 2) supports two thin film magnetic heads 10 and each has a pair of coil conductor leads 24 and 26. The slider 16, in operation, rides over the disk 12 spaced by a small spacing $\underline{h}$.

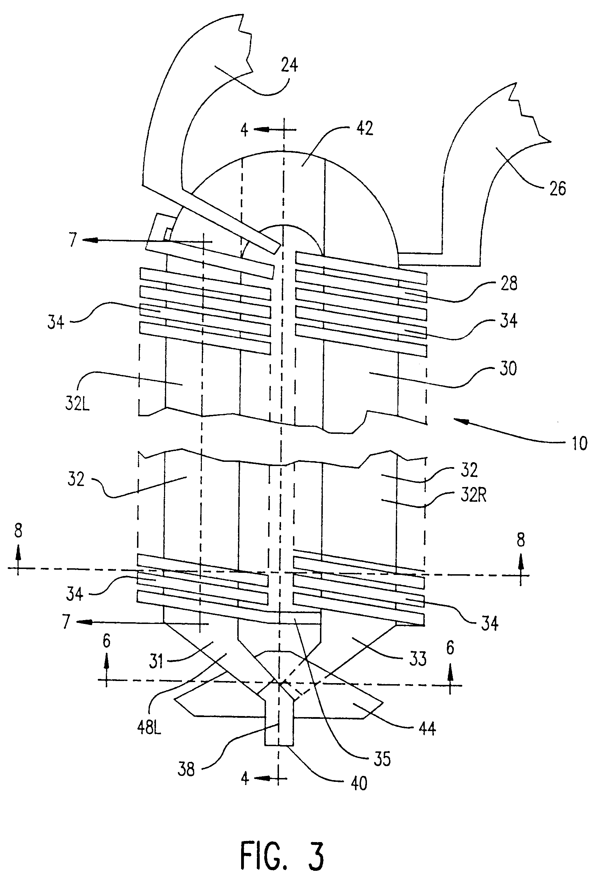

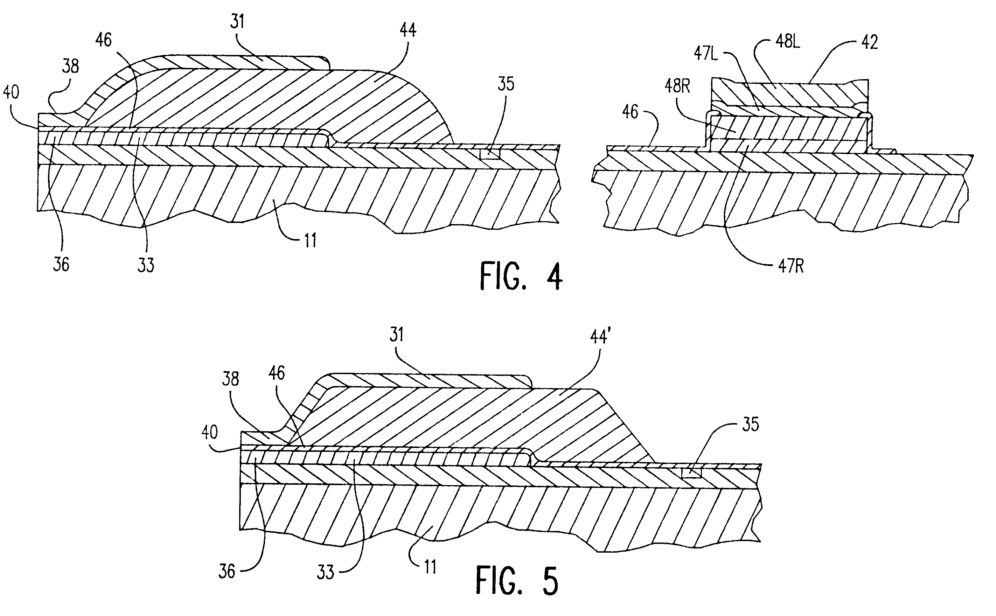

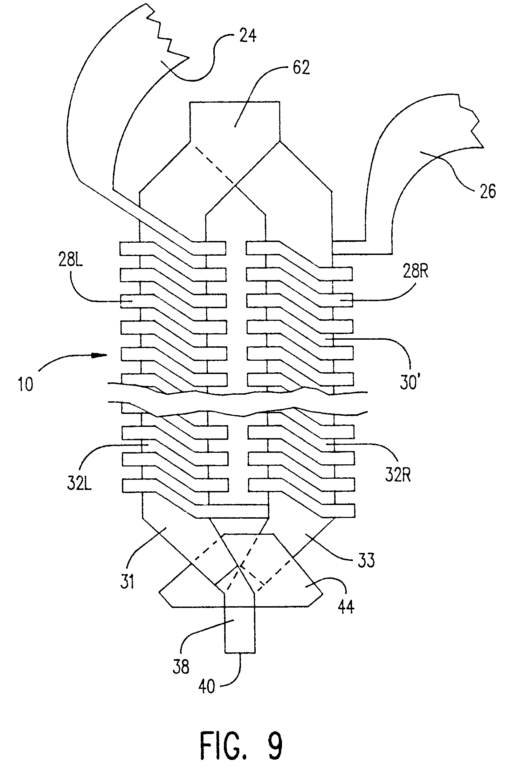

Each thin film magnetic head 10 comprises a planar magnetic yoke structure 30 having spaced apart outside yoke portions 32L and 32R, and yoke transition portions 31 and 33 which extend from outside yoke portions 32L and 32R to pole pieces 36 (Fig. 4) and 38. A coil 28 is formed having coil sections 28L and 28R (Fig. 8) connected by a crossover conductor 35 (Fig. 3) comprising coil turns 34 wrapped helically about each of the separate outside yoke portions 32R and 32L. The overlapping pole pieces 36 and 38 form a transducing gap 40 at the end of the magnetic yoke 30 which faces the magnetic disk 12, and a back gap structure 42 contiguous with the outside yoke portions 32 completes the magnetic yoke structure 30.

This magnetic head design permits the inclusion of a greater number of turns with reduced inductance and impedance in the coils so that a high magnetic head efficiency can be maintained.

The system also includes means operable in response to a write cycle to produce a current signal of a predetermined level in each of the windings so that the resulting flux in the magnetic yoke is additive at the transducing gap between the pole pieces so that a magnetic pattern, representative of data, is recorded on the magnetic recording medium in an area adjacent the transducing gap, and means operable in response to a read cycle to produce currents in the windings in response to previously recorded magnetic fields being read at the transducing gap.

A non-magnetic spacer member 44 is positioned between the magnetic yoke transition portions 31 and 33 just beyond the pole pieces 36 and 38 to provide a vertical separation greater than the length of transducing gap 40 as the magnetic yoke legs diverge from the transducing gap pole pieces 26 and 38 to the outside yoke portions 32.

Magnetic pole pieces 36 and 38 (Fig. 4) are separated at the transducing gap 40 by a non-magnetic insulating gap forming layer 46. Non-magnetic spacer member 44 is deposited, preferably as organic photoresist material, over the gap forming layer 46, and the spacer member 44 is formed with it's greatest thickness in the middle and with a thickness that progressively decreases toward it's edges to form a substantially dome shaped cross-section. Thus the outside yoke portions 32L and 32R are separated by a distance greater than, and preferably 50 times, the gap 40. The edge of spacer member 44 nearest the transducing gap 40 defines the zero throat position, i.e. the position at which the pole pieces start to diverge vertically as shown in Fig. 4. The magnetic yoke legs also start to diverge laterally in this area, and the spacer layer extends sufficiently far in a direction away from the zero throat position that flux leakage in this area is negligible.

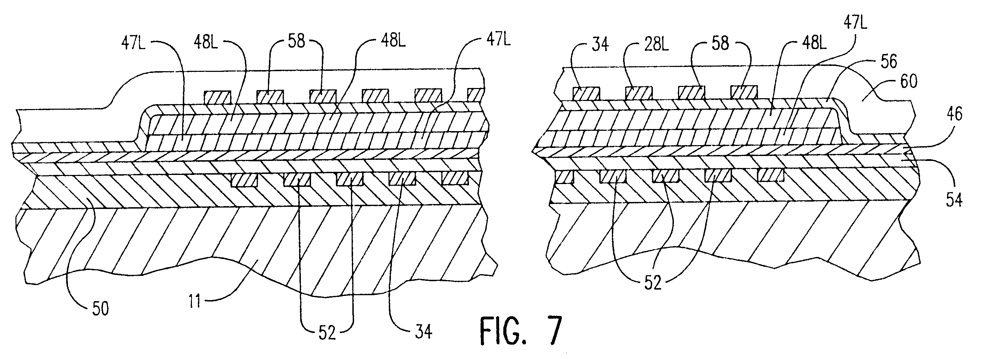

The magnetic head 10 is produced on a suitable substrate 11 (Fig. 7) upon which is deposited a base layer 50 of a suitable insulating material such as alumina, for example. The purpose of base layer 50 is to provide a planar surface of a material having a high resistivity. Should the substrate 11 have sufficiently high resistivity and have a sufficiently planar surface, then base layer 50 can be eliminated. The turns 34 of coil 28 are produced in two parts with a lower coil layer 52 of a plurality of conductors and an upper coil layer 58 of conductors making electrical contact with opposite ends of adjacent conductors of the lower coil layer 52, thereby forming a helically wound coil 28 around outside yoke portions 32.

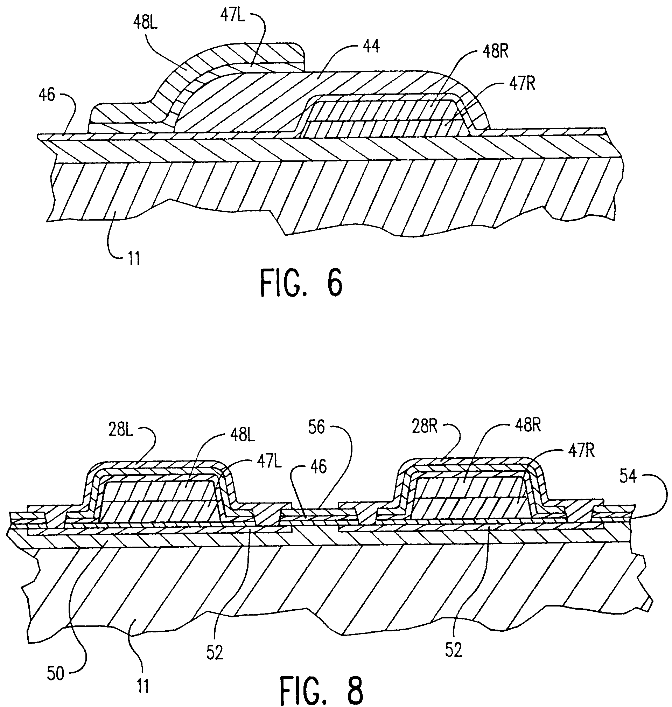

The thin film magnetic head 10 is fabricated by the use of suitable deposition and patterning techniques that are known in the art. The bottom coil layer 52 is deposited first. If desired, a thin layer of electroless plated gold can be provided over the top of coil layer 52 to reduce contact resistance. This is followed by a insulation layer 54, such as alumina, which electrically insulates the coils 28L and 28R from the magnetic yoke structure 30. The part of the magnetic yoke 30R which comprises first pole piece 36, yoke transition portion 33, and outside yoke portion 32R is deposited next. The portion 32R of the magnetic yoke structure 30 comprises a first thinner layer 47R, (Fig. 6) which extends to the pole tip region and a second thicker shaping layer 48R, 48L which is ended prior to the pole tip region. The layers 47R and 48R are electrically insulated from the coil layers by means of layer 54 of insulating material. Then follows the deposition of a non-magnetic insulator layer 46 which defines the transducing gap 40. The vertical separation non-magnetic member 44 is then deposited, and comprises a suitable insulation layer such as alumina, $SiO_2$, or hard baked photoresist. A via is then opened in the insulation layer 46 (Fig. 4) covering the first deposited yoke structure 30R in the area of the back gap 42. The part of the magnetic yoke 30L which comprises second pole piece 38, yoke transition portion 31, and outside yoke portion 32L is then deposited. The portion 32L comprises a thin layer 47L and a thicker layer 48L which complete the planar magnetic yoke structure 30 due to contact through the open via with layer 48R of the magnetic yoke part 30R to complete the back gap closure 42.

A layer 56 of insulation is then deposited over the yoke structure, and vias are opened to the ends of each conductor of the bottom coil layer 52. While the insulation layer 56 can he $Al_2O_3$, $SiO_2$ or any other similar material, from a fabrication point of view, it may be preferred to use a Z photoresist which, after opening the vias, can be hard baked. The top coil layer 58 is then deposited, by electroplating copper, for example, to complete the coil structure 28 on each of the outside yoke portions 32L, 32R. A protective layer 60, of alumina, for example, is then deposited to protect the head 10 from either mechanical damage or corrosion damage from the head environment.

The deposition of the magnetic layers can be done either by plating through a frame mask onto a seed layer, or can be sputtered and shaped by ion milling, reactive ion etching, or any other suitable subtractive process. The magnetic yoke structure can be formed of NiFe, CoFeCu, CoNiFe, or any other suitable magnetic material.

In another embodiment the spacer member - may be a separation layer 44' (Fig. 5) having a trapezoidal shaped cross-section. In this case it is preferably of $Al_2O_3$ or $SiO_2$.

In another embodiment the basic head structure remains the same, but has a magnetic yoke structure 30' (Fig. 9) with a back gap closure 62 in the form of an inverted Y.

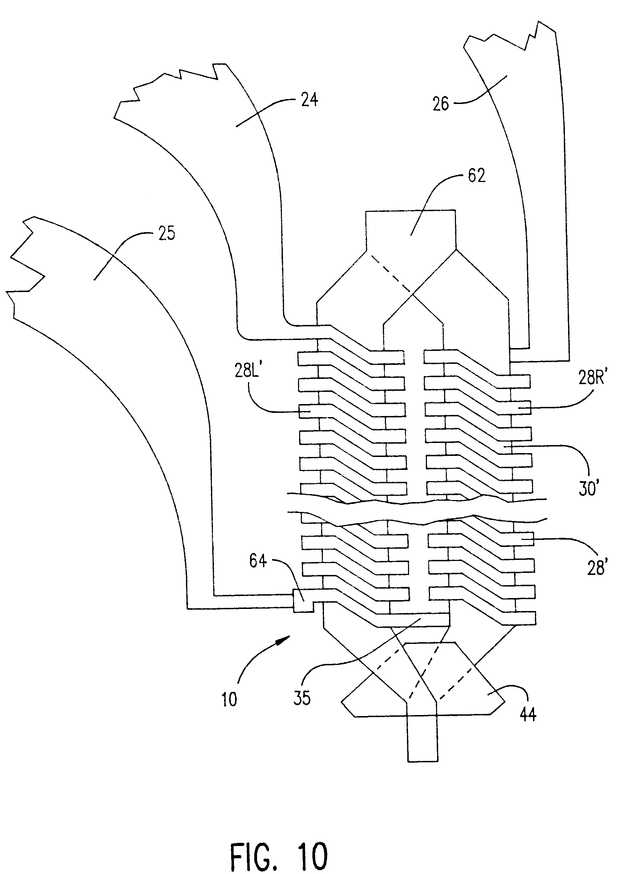

In another embodiment of the invention, the yoke structure 30' (Fig. 10) has coil sections 28R' and 28L' provided with a centre tap. The crossover conductor 35 between the coil sections 28L and 28R is extended to form a centre tap terminal 64, and a coil lead 25 is connected to this terminal. In this embodiment, the coil section 28R' can be selected by circuit connections to coil leads 25 and 26, and the coil section 28L' can be selected by circuit connections to coil leads 24 and 25. As in the previously described embodiments, the entire coil 28' can be selected by circuit connections to coil leads 24 and 26.

As the magnetic yoke 30 is desirably to be planar, at least along the outside yoke portions 32, the yoke transition portions 31 and 33 are separated vertically by the spacer member 44 and the magnetic yoke 30 is preferably formed in at least two separate steps with intimate contact between the portions of the yoke formed in the separate steps. In the one embodiment of the invention (Figs. 3 and 4), the separate pieces of the magnetic yoke are overlapped in the back gap region 42.

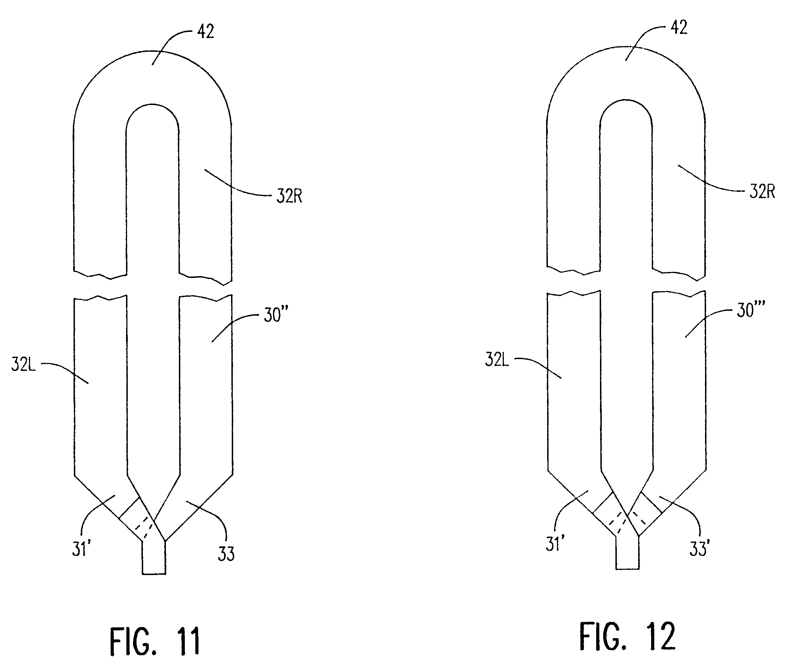

However, in another embodiment of the invention, the yoke structure may be a magnetic yoke 30″ (Fig. 11) made in two steps with an overlap in yoke transition portion 31″. In the first step, the part of the yoke is formed comprising pole piece 36, yoke transition portion 33, outside yoke portion 32R, back gap closure 42, outside yoke portion 32L, and a part of yoke transition portion 31'. In the second step, the overlapping part of the yoke transition portion 31' and the pole piece 38 are formed to complete the magnetic yoke.

In another embodiment of the invention, the magnetic yoke structure may be a magnetic yoke 30″ (Fig. 12) made in three steps with an overlap in both yoke transition portions 31' and 33'.

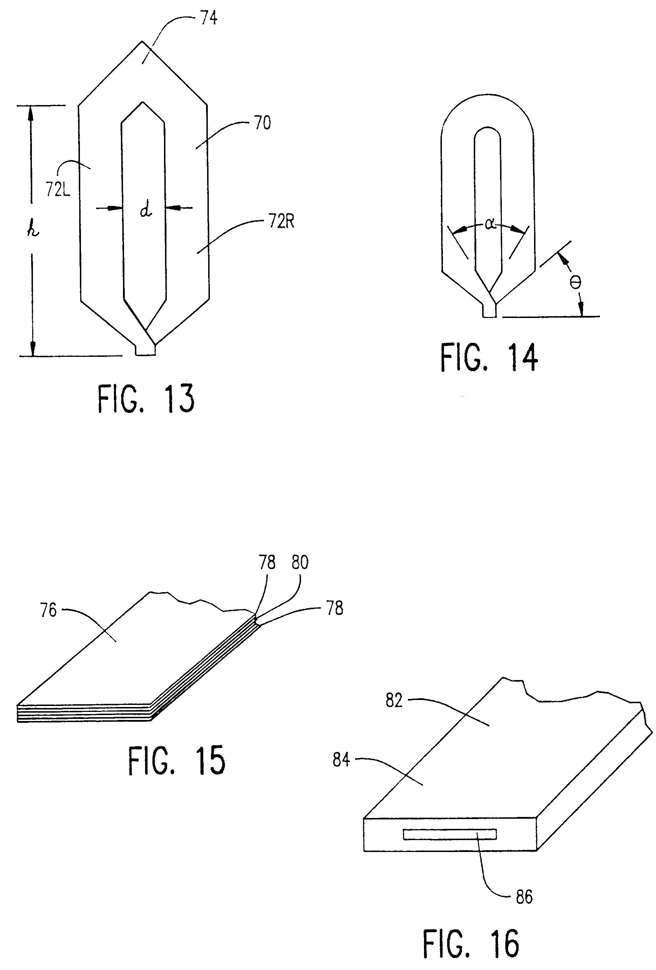

In addition to the magnetic yoke shape shown in Figs. 3, 9, 11 and 12, there are a number of other yoke shapes which can be used such as that shown in Fig. 13. For this and other yoke shapes, there is an important relationship between the height $\underline{h}$ of the yoke and the separation $\underline{a}$ of the two legs. The wider the separation $\underline{d}$, the higher can be the yoke height $\underline{h}$ with approximately the same flux leakage taking place between outside legs 72L and 72R of the magnetic yoke 70. It has been found that, in a practical embodiment, the larger the height $\underline{h}$ the more turns can be placed around each outside leg 72L, 72R of the yoke 70.

However, when increasing the height $\underline{h}$, it is necessary also to increase the separation $\underline{d}$ and width of yoke 70 in order to maintain the same head efficiency. The back gap 74 (Fig. 13) is in the shape of an inverted V. The flux leakage can be minimized even further by decreasing angle θ (Fig. 14) and increasing angle α. The lower limit of the angle θ is determined by side-reading considerations.

The magnetic yoke structure may comprise a laminated magnetic structure 76 (Fig. 15) comprising alternate thin layers of a ferromagnetic material 78 and a non-magnetic material 80. The magnetic yoke structure may also comprise a closed flux magnetic structure 82 (Fig. 16), whose ferromagnetic material 84 has edge closures around the non-magnetic material 86. As this structure is edge domain free, it is extendable to very narrow pole tips which permits the achievement of a very high recording density.

The described thin film inductive magnetic head having an open magnetic yoke with spaced apart outside legs which makes it easier to increase the number of turns of the coil, requires less mask layers in fabrication, and makes it easier to achieve a narrower track width. In addition, a formed non-magnetic spacer member is produced in the areas just beyond the transducing gap to provide vertical separation of the two yoke portions as they diverge so that the flux leakage is minimized and a high head efficiency is maintained.

While the invention has been particularly shown and described with reference to a preferred embodiment thereof, it will be understood by those skilled in the art that various other changes in the materials of construction, form and details may be made therein without departing from the scope of the invention.

## Claims

1. A thin film magnetic read/write head comprising a substrate (11), an open magnetic yoke (30) formed over the substrate and having spaced apart outside legs (32), the legs being overlapped at one end to form confronting pole pieces (36,38) having a transducing gap (40) there-between, the magnetic yoke (30) having a back closure (42) at the other end, and a winding (38) on each of the outside legs (32) wound in a direction so that energizing the windings produces a flux that is additive at the transducing gap, characterised by a non-magnetic spacer member (44) positioned between the yoke legs (32) beyond the confronting pole pieces (36,38) to separate the outside legs by a distance greater than the transducing gap (40).

2. A head according to claim 1, wherein the outside legs (32) are spaced apart a distance at least 50 times the transducing gap.

3. A head according to claims 1 or 2, wherein the non-magnetic spacer member (44) is formed of an organic photoresist material

4. A head according to claims 1 or 2, wherein the non-magnetic spacer member (44) is formed of $Al_2O_3$ or $SiO_2$.

5. A head according to claims 1, 2 or 3, wherein the non-magnetic spacer member (44) has a dome shaped cross-section.

6. A head according to claims 1, 2 or 4, wherein the non-magnetic spacer member (44) has a trapezoidal shaped cross-section.

7. A head according to any preceding claim, wherein the non-magnetic spacer member (44) establishes the zero throat position at which the yoke legs (32) start to diverge.

8. A head according to any preceding claim, wherein the back closure (62) is in the shape of an inverted Y.

9. A head according to any of claims 1 to 7, wherein the back closure (74) is in the shape of an inverted V.

10. A head according to any preceding claim, wherein the magnetic yoke comprises a laminated structure (76) having alternate layers (78) of a ferromagnetic material separated by layers ( 80) of non-magnetic material.

11. A head according to any of claims 1 to 9, wherein the magnetic yoke (82) comprises a ferromagnetic material (84) which is closed on all sides of a non-magnetic material (86).

12. A head according to any preceding claim, wherein the winding comprises a centre-tapped winding.

13. A magnetic recording system comprising a magnetic recording medium (12) having a plurality of tracks (14) for the recording of data, a thin film inductive magnetic head (10) according to any preceding claim, maintained in a closely spaced position relative to the medium during relative movement between the head and the medium, actuator means (22) connected to the magnetic head (10) for moving the head to selected tracks (14) on the medium (12), means operable in response to a write cycle to produce a current signal of a predetermined level in each of the windings (28) so that the resulting flux in the magnetic yoke (30) is additive at the transducing gap (40) between the pole pieces (36,38) so that a magnetic pattern, representative of data, is recorded on the magnetic recording medium in an area adjacent the transducing gap, and means operable in response to a read cycle to produce currents in the windings (28) in response to previously recorded magnetic fields being read at the transducing gap (40).

FIG. 1

FIG. 2

FIG. 3

FIG. 4

FIG. 5

48L 47L 44 48R
47R
46
11

FIG. 6

28L 48L 56 28R 48R
47L 46 47R
54
50 11 52 52

FIG. 8

FIG. 7

FIG. 9

FIG. 10

FIG. 11

FIG. 12

EP 0 501 617 A2

13

74

70

72L

72R

d

h

FIG. 13

α

θ

FIG. 14

78  80

76

78

FIG. 15

82

84

86

FIG. 16